# EUROPEAN PATENT SPECIFICATION

(11) **EP 1 622 740 B1**
(45) Date of publication and mention of the grant of the patent: **02.08.2006**
(21) Application number: 04725747.2
(22) Date of filing: 05.04.2004
(51) Int. Cl.: B23Q 11/10, B05B 9/00

(54) **DEVICE AND METHOD FOR DELIVERING A LUBRICATING AND/OR COOLING FLUID IN MACHINING**
VORRICHTUNG UND VERFAHREN ZUM BEREITSTELLEN EINER KÜHL- UND/ODER SCHMIERFLÜSSIGKEIT ZUM BEARBEITEN
DISPOSITIF ET PROCEDE D'AMENEE D'UN FLUIDE LUBRIFIANT ET/OU DE REFROIDISSEMENT DANS UN SYSTEME D'USINAGE

(30) Priority: 07.04.2003 IT MI20030676
(43) Date of publication of application: 08.02.2006
(73) Proprietor: Auges S.R.L., 28021 Borgomanero NO (IT)
(72) Inventor: PIANA, Alessandro, I-13010 Fraz. Roccapietra - Varallo Sesi (IT); CAPRIOLI, Cristina, I-28040 Massino Visconti (IT)
(74) Representative: Valentini, Giuliano
(86) International application number: PCT/IB2004/001029
(87) International publication number: WO 2004/089575

(56) References cited:
- EP-A- 1 072 356
- DE-A- 19 915 265
- US-A- 4 258 885
- US-A1- 2002 096 579

## Description

### Field of the Invention

The present invention concerns a device according to the preamble of claim 1 and a method according to the preamble of claim 9 for delivering a lubricating and/or cooling fluid (also known as metalworking fluids) in the field of machinings, as both known for example from EP-A-1 072 356.

In particular, the present invention is applicable in all those machinings which provide contact between a tool and a workpiece in order to remove material from the workpiece itself, both in case of machining being operated with specific cutting tools (for example turning, milling, drilling, etc.) and in case of machining being operated with an undefined cutter tool (for example grinding, lapping, etc.).

### Background of the invention

As a way of example, specific reference will be made below to machinings with chip removal which are operated by specific cutting tools on metallic materials, but it has to be understood that principles of the present invention are equally applicable to generally all machinings and to all types of materials (for example ceramic materials, minerals, etc.), machining of which may require lubrication and/or cooling.

In machinings with chip removal the tool is subject to wear, which principally occurs on the cutting edge of the tool, due to the friction at the contact areas workpiece-tool-chip, to high mechanical loads and to high thermal stresses. In particular conditions, contact pressure can achieve values up to 1500 N/mm² and temperature at the chip-tool interface can also exceed 1100 °C.

The source of all wear problems of a tool is however referable to the heat which substantially generates because of plastic deformation of the material and of friction which mostly occurs in the point where chip contacts the surface of the tool.

In the related art lubricating and/or cooling fluids (metalworking fluids) are then utilized which are generally constituted by oil eventually mixed or emulsified in water. In particular, as it frequently happens, the lubricating and cooling fluid is constituted by a mix or an emulsion of oil in water in order to exploit lubricating characteristics of the oil together with the high heat exchange efficacy of the water. In fact lubricating and cooling fluids have the dual task both of reducing friction between mutually contacting parts and of removing the heat thus generated.

Since a large amount of heat generated during the machining is absorbed by the chip, there is the problem of removing heat from the tool, and this substantially means cooling the tool in order to limit, as much as possible, wear of the tool itself.

As a matter of fact, it has been found from research in this field that duration of a tool is directly related to the cutting temperature (see for example see "TECNOLOGIA MECCANICA E STUDI DI FABBRICAZIONE" - F. Giusti e M. Santochi - Casa Editrice Ambrosiana).

As a confirmation of results of this research, it has actually found that also a low percentage reduction of the cutting temperature can highly improve tool duration. As way of example, for a tool provided to tolerate a maximum temperature of 600 °C, it has been found that a reduction in the cutting temperature of about 30 °C (from 510 °C to 480 °C) can improve duration of the tool of about five times (from about 20 to about 100 minutes).

One of the most diffused lubricating and cooling systems involves predisposition of spouts of lubricant and coolant fluid which are directed toward the working area, or rather toward the contact area between the tool and the workpiece. However, only the fluid portion which flows contacting the workpiece during its machining is able to remove part of the heat in the area of interest.

Consequently, in order to be sufficiently effective, these known systems require high fluid flow rates, at variable pressures, depending on power of the working machine or depending on the volume of removed chip (for example according to standard UNI ISO8688). However, heat removal achievable with such systems often appears insufficient in particular conditions depending on machining parameters, like for example cutting speed and/or depth.

Moreover it is opportune to point out that traditional lubricating and cooling systems require a collection tank having sufficient capacity to allow heat exchange between the recovered metalworking fluid and the environment before the fluid itself is again reintroduced in the circuit. For this reason, collection tanks are generally designed to have a capacity variable from 5 to 8 times the maximum flow rate of the circuit and then are particularly cumbersome.

For these reasons, systems have been provided wherein the fluid, constituted exclusively by lubricant oil, is directed toward the working area in an atomized form, i.e. with the fluid being sprayed in extremely small droplets by way of a pressurized air flow according to well known working principles of airbrushes. The carrier of the so formed fluid droplets is constituted by the same pressurized air flow.

If from one side, considering that a droplet of the lubricating fluid has a substantially spherical shape (maximum surface for a given volume), it is possible to improve efficiency of heat exchange between the lubricating fluid and the tool, as well as between the lubricating fluid and the surrounding setting, from the other side adoption of lubricating oil alone, without any addition of water, principally achieves a lubricating function but does not permit to achieve the effective heat removal which is guaranteed by the high heat exchange capacity of water. These known systems, also known in the art as "minimal", permit to limit fluid flow rates compared to direct flow systems, but have some drawbacks quite related to the formation-and-conveying technique of droplets toward the area of interest.

First of all, the atomization technique itself by way of an air jet involves formation of particles having not homogeneous dimensions and, in particular, formation of particles having dimensions much larger than others. Consequently, largest particles tend to agglomerate because of molecular cohesion forces, and the droplets formed in this way tend to slip away from the chip actually preventing formation of a stable film of fluid between the tool and the chip. An indication of this drawback is made evident from the formation of droplets of large dimensions near the area of interest.

Secondly, the same air flow which carries fluid droplets tends to "bounce" against surfaces where is directed. Bouncing air carries fluid droplets which are then sent away from the interested area. Because of this phenomenon, the amount of droplets which reaches the interested area is reduced, further preventing formation of a stable film of lubricating fluid at contacting points between tool and chip.

Moreover, the same carrier air flow generates vortexes which keep droplets of fluid in suspension. These droplets do not arrive at the area of interest and, together with droplets carried by the bounced air, tend to promote formation of "fog", which results particularly undesirable mostly for safety reasons. Lubricating fluids, in fact, can be toxic, and in these cases it is therefore indispensable to provide suction supplies suitably designed to contrast fog enhancement.

It is necessary to add that, in "minimal" systems, efficacy of a possible aqueous component, in case it was added to the lubricating oil, may anyway be impaired by partial evaporation caused by the air flow on the smallest water droplets.

### Summary of the Invention

This being stated, the task of the present invention is to provide a method and a lubricating-cooling device which allows overcoming of prior art drawbacks.

In the scope of this task, it is a general object of the present invention to provide a device and a method for delivering a cooling and/or lubricating fluid which allow to efficiently cool the tool adopted for machining, as well as to effectively lubricate the interface between the tool and the machined workpiece.

It is a particular object of the present invention to provide a method and a device for lubricating-cooling which permit generation of an effective flow of lubricant and cooling fluid between the tool and the machined workpiece.

It is another object of the present invention to provide a method and a device of the aforesaid type which allow to limit, as much as possible, the flow rate, and therefore the consumption of the cooling-lubricating fluid.

It is a further object of the present invention to provide a method and a device of the aforesaid type which allow highly reduction of residual risks related to the eventual toxicity of the cooling-lubricating fluid.

These objects are achieved by the present invention which concerns a device for delivering a lubricating and/or cooling fluid near the contact area between a tool and a workpiece being machined, comprising at least a circuit for circulation of the fluid and delivering means to deliver the fluid near, or in correspondence of, the contact area between the tool and the workpiece, characterized in that delivering means include one or more nozzles of the airless type to atomize the fluid.

The wording "airless" is intended to identify those nozzles wherein "pulverization" of the fluid is mechanically achieved, i.e. by submitting the fluid at a certain pressure and making it pass through a duct having a particular geometrical shape near the delivery opening of the nozzle. In this way a pulverization, which sometimes is defined "hydraulic" (or "atomization"), is obtained, which is in contraposition to that defined "pneumatic" (or "nebulization") typical of known minimal systems.

The invention also concerns a method for delivering a lubricating and/or cooling fluid near the contact area between a tool and a workpiece being machined, wherein the fluid is supplied through a circuit and delivered near, or in correspondence of, the contact area between the tool and the workpiece, characterized in that delivering of the fluid is carried out by its atomization through one or more airless nozzles.

"Airless" nozzles adopted according the present invention are generally for operating at particularly high pressures, typically at maximum pressures up to 600 bar. Nevertheless, according to the present invention, the fluid is supplied to nozzles having pressures not higher than 150 bar and, preferably, having pressures from about 5 bar to about 70 bar.

Moreover, it is possible to have an effective lubricating and cooling operation also with particularly low fluid flow rates, from 10 to 100 times lower than flow rates of traditional systems. This means that the system supplying the lubricating and cooling fluid has reduced power and dimensions, in particular collection tanks are less cumbersome, so permitting greater accuracy in the fluid treatment (decontamination and filtering).

Advantages achievable with the present invention are anyway multiple and permit to highly reduce the wear of the tool, consequently improving its useful life.

In particular, by using nozzles of the "airless" type, dimensions of particles are controllable so that they may result sufficiently small and substantially homogeneous. Radius of each particle, in fact, is directly proportional to the surface tension of the fluid and is inversely proportional to constant or easily controllable factors, as for example the fluid viscosity and the kinetic energy of particles, the latter essentially depending on the supplying pressure and on the exit diameter of the nozzle.

The possibility of controlling dimensions of particles, making them particularly small and homogeneous, makes the heat exchange particularly efficient because small particles quickly absorb heat from the tool and from the chip, and as much quickly they release it to surrounding environment. In fact, it has been found that temperature of the lubricating and cooling fluid, in the collection tank located under the working area, does not increase, at the same time contributing in keeping substantially unaltered chemical and physical properties of the lubricating and cooling fluid. In particular, it has also been found that atmosphere near the delivering area of atomized fluid undergoes a relevant temperature reduction compared to the environment, thus contributing to make the heat exchange more efficient near the contact area between the tool and the workpiece (or chip).

Moreover, by maintaining dimensions of particles particularly small, it is possible to realize a constant fluid flow particularly effective for reduction of friction at the chip-workpiece-tool interfaces.

Differently from known minimal systems, wherein particles are carried by an air flow, particles obtained by "airless" systems have their own speed. Absence of an air flow as a carrier, prevents rising up of drawbacks due to bouncing of the air flow described for the minimal systems. This promotes deposition of the fluid in the area of interest and the consequent formation of a constant flow of lubricating and cooling fluid between the tool and the workpiece.

In this way, formation of fumes near the area of interest is highly reduced, and even completely eliminated, with consequent improvements related to safety of working environment and to ambient influence.

Another relevant advantage is given by the fact that, by improving the lubrication and cooling of the tool, it is possible to machine at high speed, with consequent improvements in productivity.

### Brief Description of the Drawing

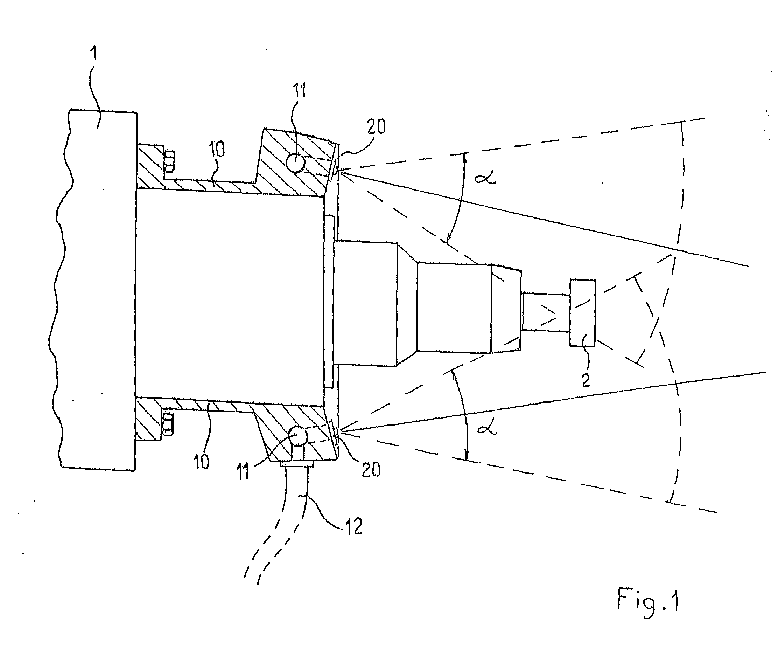

Further characteristics and advantages of the present invention will be more evident from the following description, made simply as an explanatory, non-limiting example, with reference to the sole Figure 1, which schematically represents a lubricating and cooling device according to a possible embodiment of the present invention.

### Modes for Carrying out the Invention

Device illustrated in Figure 1 comprises a support element 10 for "airless" type nozzles 20 to deliver the lubricating and/or cooling fluid. Two "airless" type nozzles 20 are visible in Figure 1, but it is opportune to consider that more than two nozzles may be provided, as well as a single one, depending on workings to be done.

Jets from each nozzle 20 are directed toward the machining area, that is toward the rotating tool 2 (for example a milling tool), and generate a jet having a spray angle α typical of each nozzle.

Support element 10 is fixed in a known manner to a manufacturing machine 1 and comprises a series of internal conduits 11 for supplying the lubricating and cooling fluid to nozzles 20.

The lubricating and cooling fluid is supplied under pressure through a duct 12 connected to a pump output (not shown) suitable for supplying the fluid at a pressure not higher than 150 bar and, preferably, between about 5 and 70 bar.

"Airless" type nozzles, suitable for operating according to principles of the present invention, are provided with a delivering orifice having a diameter between 0.10 mm and 0.80 mm. Configuration of the jet is preferably plan, with a fan shape, with a spray angle between about 10° and 80°, depending on the workings to be done and on dimensions of the tool.

The device of the present invention can be utilized with any type of lubricating and cooling fluid, used pure, mixed in water or in water emulsion. Even if it is not expressly shown, a filter generally designed according to manufacturer's instructions is associated to the "airless" nozzles 20.

As an experimental example, a prototype of the device according to the present invention has been manufactured, mounting three equidistant "airless" nozzles on a support element 11 like that illustrated in Figure 1. "Airless" nozzles have been adopted, produced by the company Wagner and sold with the commercial name "ProfiTip", which have a delivering orifice of 0.48 mm, with a plan fan-shaped jet having a spray angle equal to 40°. Utilized filters had a size of the mesh equal to 50 µm.

As lubricating and cooling fluid it has been adopted a fluid produced by BLASER & CO. SA, delivered with the commercial name Blasocut BC20, mixed with water at 5% in volume and supplied at a pressure of 10 bar.

The device has been applied to a machine provided with a milling tool. During the machining test, the flow rate measured for each nozzle was 0.48 l/min.

During the test, total absence of fumes in correspondence of the working area has been observed, as well as the substantial absence of droplets formed by cohesion on the workpiece and near the same. Also the temperature of the lubricating and cooling fluid, in the collection tank located under the working area, has maintained substantially unaltered, this confirming the particular efficiency of the heat exchange of the atomized liquid according to the teachings of the present invention.

Useful life of the tool and the cutting speed are proved to be more than doubled compared to the same parameters measured, with other conditions being equal (tool, machined material, etc.), in case of adoption of known lubrication and cooling systems.

Another factor which gives evidence of the advantages of the present invention has been the observation of the shapes of the chips, which result less compressed compared to those generated during tests with known lubrication and cooling systems. Because of the shape of the chips depending on the length and on the angle of the cutting plane, this means that the lubrication and cooling system according to the present invention results more effective also from the point of view of reduction of the friction between the tool and the chip.

Although a lubrication and cooling system has been described as an example wherein atomization is operated externally with respect to the tool, it is opportune to specify that principles of the present invention can be applied, with the same efficacy, also to lubrication and cooling systems provided within the tool, for example by providing at least an "airless" type nozzle put in fluid communication with an internal channel located inside the same tool.

### EXPERIMENTAL RESULTS

A device, substantially similar to that one just described, has been operated to perform tests in comparison with known lubrication and cooling systems. In fact several tests have been performed and repeated at different working conditions, continuously changing the typology of the machining, of machined materials, of adopted inserts, etc.

In the following examples, which illustrate average values measured for some of the most significant performed tests, performances of a system according to the present invention have been compared to performances provided by currently known lubrication and cooling systems, in particular by traditional systems using flexible and/or modular pipes to deliver the lubricating-cooling fluid in correspondence of the machining area.

In each test, the most important parameters of respective lubrication and cooling systems have been detected, i.e. the fluid flow rate, the supplying pressure and the power absorbed by lubricating-cooling systems. Concerning parameters related to the performances of the systems, the following parameters have been detected:
- Q (cm³/min): amount of chips removed in a minute, that is the parameter representative of the productivity;
- Cₚ (Process Capability): it is a numerical coefficient which indicates the quality in time of the machining according to statistical criteria well known in the field;
- Type of the tool wear: estimated according to the standard UNI ISO 8688;
- Duration of the tool: generally expressed in minutes and eventually compared with production parameters, for example number of workpieces, covered distance expressed in meters, number of cuttings, etc..

Further details on standards and parameters regarding evaluations of performances herein disclosed can be found in "CUTTING TOOLS" by R. Edwards, published by The Institute of Materials - 1993.

In all tests of lubrication and cooling systems, the same type of fluid has been utilized. Also results of some tests are disclosed (Examples 4 and 6) wherein comparison has been provided between performances of a system according to the present invention and results of dry machinings.

### EXAMPLE 1

Climb milling machinings of smoothing have been executed on hardened and tempered steel of the type UNI X20Cr13 having hardness equal to 330HB and a specific cutting force equal to 2300 N/mm². In the system according to the present invention, the lubricating-cooling fluid was delivered by way of three nozzles symmetrically disposed outside the tool.

Inserts adopted for the tool are produced by the firm WALTER and identified by the code P2894-1 VTA 51.

Results of the executed machinings, expressed as average values on the set of the same tests, are listed in the following Table 1, wherein the first column quotes the parameters of the traditional lubrication and cooling system and the second one quotes the parameters of a lubrication and cooling system according to the invention.

**TABLE 1**

| | Traditional System | System of the invention |
|---|---|---|
| Flow rate (l/min) | 10 | 0.7 |
| Pressure (bar) | 2 | 30 |
| System power (kW) | 2.2 | 0.75 |
| Q (cm³/min) | 92 | 162 |
| Cₚ | 0.7 | 1.5 |
| Type of tool wear | CF* | VB1-0.2** |
| Useful life of the tool | 30 min. | 30 min. |

| | | |
|---|---|---|
| *CF: catastrophic failure (rapid deterioration of the operative part until its complete breaking - UNI IS08688). | | |
| **VB1-0.2: uniform flank wear with depth equal to 0.2 mm (deterioration of normal type for the tool - UNI ISO8688). | | |

As it can be seen, the flow rate of the lubricating and cooling fluid is highly reduced to less than 1/10 compared to traditional systems. Moreover, considerable improvements have been achieved both from the point of view of the productivity (+75%) and from the point of view of the quality of the machining (+100%).

Also from examination of wear of the inserts, it is evident that a system according to the present invention assures keeping of the tool integrity. By the way, it is opportune to remind that a system according to the present invention permits to reduce replacements of tools and/or inserts, thus decreasing idle times necessary for the replacement and therefore allowing further improving of the productivity of the machining process in its entirety.

The minor wear which inserts are subject to has permitted to machine a number of workpieces (120 pieces) practically double with respect to the number of workpieces which has been possible to machine with known inserts subject to traditional lubricating-cooling systems.

Moreover, relating to the piece machined under operation of the traditional lubricating-cooling system, the need has been found for carrying out a subsequent grinding working in order to remove superficial waviness, while the workpiece machined under operation of the lubricating-cooling system according to the present invention already showed an optimal surface finish, that is a finish free from waviness and with roughness in accordance to required values.

### EXAMPLE 2

Internal and external turning workings have been carried out on cast iron of the type GG25 having hardness equal to 220HB and specific cutting force equal to 1150 N/mm². In the system according to the invention the lubricating-cooling fluid was delivered by a single nozzle near the insert (internal adduction).

Inserts utilized for the tool are produced by the company SANDVIK with quality identified by the code GC3215.

Results of the performed workings, expressed as mean values of the set of the same tests, are quoted in the following Table 2, wherein the first column contains the parameters of the traditional lubricating-cooling system and the second one contains the parameters of a lubricating-cooling system according to the invention.

**TABLE 2**

| | Traditional System | System of the invention |
|---|---|---|
| Flow rate (l/min) | 11 | 0.9 |
| Pressure (bar) | 8 | 60 |
| System power (kW) | 7.5 | 0.75 |
| Q (cm³/min) | 115 | 390 |
| Cₚ | 1.3 | 2 |
| Type of tool wear | KT2-0.8* | VB1-0.2** |
| Useful life of the tool | 30 min. | 60 min. |

| | | |
|---|---|---|
| *KT2-0.8: stepped crater wear of the cutting face with depth equal to 0.8 mm. | | |
| **VB1-0.2: uniform flank wear with depth equal to 0.2 mm. | | |

Also in this case the flow rate of the lubricating-cooling fluid results to be always considerable lowered to less than 1/10 compared to traditional systems.

Moreover considerable advantages are achieved both for what concerns the productivity (+240%) and for what concerns the quality of the machining (+50%).

From examination of the inserts wear, it is evident that a system according to the present invention assures a constant quality of the tool: the useful life of the insert appears to be practically doubled.

### EXAMPLE 3

Different drilling workings have been provided on the same material of Example 2. In the system according to the invention the lubricating-cooling fluid was delivered by two nozzles directed toward the cutting area.

Inserts utilized for the tool are produced by the company SANDVIK both with quality 53/3040 and with quality 53/1020.

Results of the provided workings, expressed as mean values of the set of the same tests, are quoted in the following Table 3, wherein the first column contains the parameters of the traditional lubricating-cooling system and the second one contains the parameters of a lubricating-cooling system according to the invention.

**TABLE 3**

| | Traditional System | System of the invention |
|---|---|---|
| Flow rate (l/min) | 15 | 0.9 |
| Pressure (bar) | 8 | 60 |
| System power (kW) | 7.5 | 0.75 |
| Q (cm³/min) | 128 | 305 |
| Cₚ | 1.3 | 2 |
| Type of tool wear | KT2-0.35* | VB 1-0.25** |
| Useful life of the tool | 60 min. | 60 min. |

| | | |
|---|---|---|
| *KT2-0.35: stepped crater wear of the cutting face with depth equal to 0.35 mm. | | |
| **VB1-0.25: uniform flank wear with depth equal to 0.25 mm. | | |

Also in this case the flow rate of the lubricating-cooling fluid results to be always considerable lowered to less than 1/10 compared to traditional systems.

Moreover considerable advantages are achieved both for what concerns the productivity (+140%) and for what concerns the quality of the machining (+50%).

Also examination of the wear on inserts provides highly improved results with respect to the known technique: in fact it was possible to carry out 71 meters of drilling versus 30 meters obtained with inserts subject to operation of a traditional lubricating-cooling system.

### EXAMPLE 4

Bordering workings have been carried out on annealed steel of the type AISI416 with hardness equal to 200HB and specific cutting force equal to 1800 N/mm².

Comparison has been carried out between the dry machining and the machining subject to the action of the lubricating and cooling fluid delivered by way of a system according to the present invention. This type of comparison has been provided because, for particular types of machining, materials and tools, dry machining is provided. Dry machining is based on the assumption that the same chips, removed during the machining, contemporary permit to carry out heat and thus to remove the heat itself from the interface workpiece/tool.

The lubricating and cooling fluid of the system according to the present invention was delivered by a three nozzle system.

Inserts utilized for the tool are produced by the company SANDVIK with quality 2040.

The following Table 4 provides results of the tests as carried out.

**TABLE 4**

| | Dry machining | System of the invention |
|---|---|---|
| Flow rate (l/min) | - | 2.4 |
| Pressure (bar) | - | 50 |
| System power (kW) | - | 0.75 |
| Q (cm³/min) | 182 | 309 |
| Cₚ | 0.2 | 1.5 |
| Type of tool wear | CF* | VB1-0.15** |
| Useful life of the tool | 3 min. | 45 min. |

| | | |
|---|---|---|
| *CF: catastrophic failure. | | |
| **VB1-0.15: uniform flank wear with depth equal to 0.2 mm. | | |

Improvements in productivity (+70%) and, above all, in the quality of the machining (+650%) are immediately evident.

Aside from improving the tool quality, which tool is then less subject to wear, another particularly interesting result comes from the considerable increment of the useful life of the insert (+1400%).

### EXAMPLE 5

Different frontal grooving workings have been carried out on steel of the type AISI316 having hardness equal to 180HB and specific cutting force equal to 2450 N/mm². In the system according to the present invention the lubricating and cooling fluid was in this case delivered by a single nozzle.

Inserts adopted for the tool are produced by the company SANDVIK with quality GC235.

Results of the provided workings are quoted in the following Table 5.

**TABLE 5**

| | Traditional system | System of the invention |
|---|---|---|
| Flow rate (l/min) | 5 | 0.6 |
| Pressure (bar) | 5 | 50 |
| System power (kW) | (not detected) | 0.75 |
| Q (cm³/min) | 51 | 59 |
| Cₚ | (not detected) | (not detected) |
| Type of tool wear | CF* | VB 1-0.10** |
| Useful life of the tool | 19 min. | 19 min. |

| | | |
|---|---|---|
| *CF: catastrophic failure. | | |
| **VB1-0.10: uniform flank wear with depth equal to 0.10 mm. | | |

The reduction of the flow rate of the lubricating-cooling fluid and the improvement in the useful life of the inserts are confirmed.

### EXAMPLE 6

Spherical turning workings have been provided on a brass alloy of the type CuSn5Pb5Zn5-C with 100HB hardness and specific cutting force equal to 700 N/mm².

As in the example 4, comparison was provided between the dry machining and the machining subject to the action of the lubricating and cooling fluid delivered by way of a system according to the present invention.

The lubricating and cooling fluid of the system according to the present invention was delivered by a single nozzle system.

Inserts adopted for the tool are produced by the company SANDVIK with quality H 13A.

The following Table 6 provides results of the tests as carried out.

**TABLE 6**

| | Dry machining | System of the invention |
|---|---|---|
| Flow rate (l/min) | - | 0.4 |
| Pressure (bar) | - | 15 |
| System power (kW) | - | 0.75 |
| Q (cm³/min) | 69 | 210 |
| Cₚ | 1.3 | 2 |
| Type of tool wear | VB1-0.30* | VB1-0.15** |
| Useful life of the tool | 114 min | 250 min |

| | | |
|---|---|---|
| *VB1-0.30: uniform flank wear with depth equal to 0.2 mm. | | |
| **VB1-0.15: uniform flank wear with depth equal to 0.2 mm. | | |

The productivity results considerably incremented (+200%), and also the quality of the machining results incremented (+50%).

## Claims

1. A device for delivering a lubricating and/or cooling fluid near the contact area between a tool (2) and a workpiece being machined, comprising at least a circuit for circulation of said fluid and delivering means to deliver said fluid near, or in correspondence of, the contact area between said tool (2) and said workpiece, **characterized in that** said delivering means include one or more nozzles (20) of the airless type to atomize said fluid.

2. A device according to claim 1, wherein said one or more nozzles (20) have a delivering orifice having a diameter between 0.10 mm and 0.80 mm.

3. A device according to claim 1, wherein said one or more nozzles (20) have a fan shaped planar configuration of the jet.

4. A device according to claim 3, wherein said one or more nozzles (20) have a spray angle of the jet between 10° and 80°.

5. A device according to claim 1, wherein said circuit comprises means to supply said fluid to said one or more nozzles (20) with pressures not higher than 150 bar.

6. A device according to claim 1, wherein said circuit comprises means to supply said fluid to said one or more nozzles (20) with pressures between about 5 bar and about 70 bar.

7. A device according to claim 1, wherein said one ore more nozzles (20) are externally arranged with respect to said tool (2).

8. A device according to claim 1, wherein at least one of said one or more nozzles (20) is in fluid communication with an internal duct provided in said tool (2).

9. A method for delivering a lubricating and/or cooling fluid near the contact area between a tool (2) and a workpiece being machined, wherein said fluid is supplied through a circuit and delivered near, or in correspondence of, the contact area between said tool (2) and said workpiece, **characterized in that** delivering of said fluid is carried out by its atomization through one or more airless type nozzles (20).

10. A method according to claim 9, wherein said one or more nozzles (20) have a delivering orifice having diameter between 0.10 mm and 0.80 mm.

11. A method according to claim 9, wherein said one or more nozzles (20) have a fan shaped planar configuration of the jet.

12. A method according to claim 11, wherein said one or more nozzles (20) have a spray angle of the jet between 10° and 80°.

13. A method according to claim 9, wherein said fluid is supplied to said one or more nozzles (20) with pressures not higher than 150 bar.

14. A method according to claim 9, wherein said fluid is supplied to said one or more nozzles (20) with pressures between about 5 bar and about 70 bar.

15. A method according to claim 9, wherein delivering of said fluid by atomization is provided externally to said tool (2).

16. A method according to claim 9, wherein delivering of said fluid by atomization is provided internally to said tool (2).

## Patentansprüche

1. Vorrichtung zum Zuführen eines Kühl- und/oder Schmierfluids nahe der Kontaktfläche zwischen einem Werkzeug (2) und einem zu bearbeitenden Werkstück, umfassend zumindest einen Kreislauf für den Umlauf des genannten Fluids sowie Zuführungsmittel, um das genannte Fluid nahe oder an der Kontaktfläche zwischen dem genannten Werkzeug (2) und dem genannten Werkstück bereitzustellen, **dadurch gekennzeichnet, dass** die genannten Zuführungsmittel eine oder mehr Düsen (20) zur luftlosen Zerstäubung umfassen, um das genannte Fluid zu zerstäuben.

2. Vorrichtung nach Anspruch 1, wobei die genannte eine oder mehr Düsen (20) eine Zuführöffnung mit einem Durchmesser zwischen 0,10 mm und 0,80 mm besitzt/besitzen.

3. Vorrichtung nach Anspruch 1, wobei die genannte eine oder mehr Düsen (20) eine fächerförmige planare Konfiguration des Strahls aufweist/aufweisen.

4. Vorrichtung nach Anspruch 3, wobei die genannte eine oder mehr Düsen (20) einen Spritzwinkel des Strahls zwischen 10° und 80° hat/haben.

5. Vorrichtung nach Anspruch 1, wobei der genannte Kreislauf Mittel zum Transportieren des genannten Fluids zu der genannten einen oder mehr Düsen (20) bei Drücken von nicht mehr als 150 bar umfasst.

6. Vorrichtung nach Anspruch 1, wobei der genannte Kreislauf Mittel zum Transportieren des genannten Fluids zu der genannten einen oder mehr Düsen (20) bei Drücken zwischen etwa 5 bar und etwa 70 bar einschließt.

7. Vorrichtung nach Anspruch 1, wobei zumindest eine der genannten einen oder mehr Düsen (20) außerhalb des genannten Werkzeugs (2) angeordnet ist.

8. Vorrichtung nach Anspruch 1, wobei zumindest eine der genannten einen oder mehr Düsen (20) in Strömungsverbindung mit einem im genannten Werkzeug (2) vorgesehenen Innenkanal steht.

9. Verfahren zum Zuführen eines Schmier- und/oder Kühlfluids nahe der Kontaktfläche zwischen einem Werkzeug (2) und einem zu bearbeitenden Werkstück, wobei das genannte Fluid durch einen Kreislauf transportiert und nahe oder an der Kontaktfläche zwischen dem genannten Werkzeug (2) und dem genannten Werkstück zugeführt wird, **dadurch gekennzeichnet, dass** das Zuführen des genannten Fluids durch seine Zerstäubung mittels einer oder mehr Düsen (20) zur luftlosen Zerstäubung erfolgt.

10. Verfahren nach Anspruch 9, wobei die genannte eine oder mehr Düsen (20) eine Zuführöffnung mit einem Durchmesser zwischen 0,10 mm und 0,80 mm besitzt/besitzen.

11. Verfahren nach Anspruch 9, wobei die genannte eine oder mehr Düsen (20) eine fächerförmige planare Konfiguration des Strahls aufweist/aufweisen.

12. Verfahren nach Anspruch 11, wobei die genannte eine oder mehr Düsen (20) einen Spritzwinkel des Strahls zwischen 10° und 80° hat/haben.

13. Verfahren nach Anspruch 9, wobei das genannte Fluid zu der genannten einen oder mehr Düsen bei Drücken von nicht mehr als 150 bar transportiert wird.

14. Verfahren nach Anspruch 9, wobei das genannte Fluid zu der genannten einen oder mehr Düsen bei Drücken zwischen etwa 5 bar und etwa 70 bar transportiert wird.

15. Verfahren nach Anspruch 9, wobei das Zuführen des genannten Fluids durch Zerstäubung außerhalb des genannten Werkzeugs (2) vorgesehen ist.

16. Verfahren nach Anspruch 9, wobei das Zuführen des genannten Fluids durch Zerstäubung innerhalb des genannten Werkzeugs (2) vorgesehen ist.

## Revendications

1. Dispositif pour alimenter un fluide de lubrification et/ou de refroidissement à proximité de la zone de contact entre un outil (2) et une pièce en cours d'usinage, comprenant au moins un circuit pour la circulation dudit fluide et des moyens d'alimentation pour alimenter ledit fluide à proximité de ou en correspondance avec la zone de contact entre ledit outil (2) et ladite pièce, **caractérisé en ce que** lesdits moyens d'alimentation comprennent une ou plusieurs buses (20) du type sans air pour atomiser ledit fluide.

2. Dispositif selon la revendication 1, dans lequel lesdites une ou plusieurs buses (20) ont un orifice d'alimentation ayant un diamètre compris entre 0,10 mm et 0,80 mm.

3. Dispositif selon la revendication 1, dans lequel le jet desdites une ou plusieurs buses (20) a une configuration plane en forme d'éventail.

4. Dispositif selon la revendication 3, dans lequel l'angle de pulvérisation du jet desdites une ou plusieurs buses (20) est compris entre 10° et 80°.

5. Dispositif selon la revendication 1, dans lequel ledit circuit comprend des moyens pour alimenter ledit fluide auxdites une ou plusieurs buses (20) avec des pressions ne dépassant pas 150 bars.

6. Dispositif selon la revendication 1, dans lequel ledit circuit comprend des moyens pour alimenter ledit fluide auxdites une ou plusieurs buses (20) avec des pressions comprises entre environ 5 bars et environ 70 bars.

7. Dispositif selon la revendication 1, dans lequel lesdites une ou plusieurs buses (20) sont disposées à l'extérieur dudit outil (2).

8. Dispositif selon la revendication 1, dans lequel au moins l'une desdites une ou plusieurs buses (20) est en communication fluidique avec un conduit interne prévu dans ledit outil (2).

9. Procédé pour alimenter un fluide de lubrification et/ou de refroidissement à proximité de la zone de contact entre un outil (2) et une pièce en cours d'usinage, dans lequel ledit fluide est fourni par un circuit et alimenté à proximité de ou en correspondance avec la zone de contact entre ledit outil (2) et ladite pièce, **caractérisé en ce que** l'alimentation dudit fluide est réalisée par son atomisation à travers une ou plusieurs buses (20) du type sans air.

10. Procédé selon la revendication 9, dans lequel lesdites une ou plusieurs buses (20) ont un orifice d'alimentation ayant un diamètre compris entre 0,10 mm et 0,80 mm.

11. Procédé selon la revendication 9, dans lequel le jet desdites une ou plusieurs buses (20) a une configuration plane en forme d'éventail.

12. Procédé selon la revendication 11, dans lequel l'angle de pulvérisation du jet desdites une ou plusieurs buses (20) est compris entre 10° et 80°.

13. Procédé selon la revendication 9, dans lequel ledit circuit comprend des moyens pour alimenter ledit fluide auxdites une ou plusieurs buses (20) avec des pressions ne dépassant pas 150 bars.

14. Procédé selon la revendication 9, dans lequel ledit fluide est alimenté auxdites une ou plusieurs buses (20) avec des pressions comprises entre environ 5 bars et environ 70 bars.

15. Procédé selon la revendication 9, dans lequel l'alimentation dudit fluide par atomisation se fait à l'extérieur dudit outil (2).

16. Procédé selon la revendication 9, dans lequel l'alimentation dudit fluide par atomisation se fait à l'intérieur dudit outil (2).
